# EUROPEAN PATENT APPLICATION

(11) **EP 3 208 686 A1**
(43) Date of publication of application: **23.08.2017**
(21) Application number: 15750616.3
(22) Date of filing: 09.02.2015
(51) Int. Cl.: G06F 3/01

(54) **APPLICATION CONTROL METHOD AND APPARATUS AND ELECTRONIC DEVICE**

(30) Priority: 14.10.2014 CN 201410542224
(71) Applicant: BOE Technology Group Co., Ltd., Beijing 100015 (CN)
(72) Inventor: HAN, Fang, Beijing 100176 (CN)
(74) Representative: Isarpatent
(86) International application number: PCT/CN2015/072520
(87) International publication number: WO 2016/058303

(57) **Abstract**

The present disclosure provides a method and a device for controlling an application, and an electronic device. The method includes: acquiring a depth image sequence recording a user's motion; converting the depth image sequence into a first user gesture data sequence in advance in accordance with a mathematical conversion model; acquiring, from a preset standard gesture data sequence, first target gesture data, and controlling the application based on the first target gesture data; and when a duration desired to be maintained by a target gesture corresponding to the first target gesture data exceeds a predetermined threshold, selecting, from a second user gesture data sequence, a portion of user gesture data for a subsequent matching process.

## Description

### CROSS-REFERENCE TO RELATED APPLICATION

The present application claims a priority of the Chinese patent application No.201410542224.5 filed on October 14, 2014, which is incorporated herein by reference in its entirety.

### TECHNICAL FIELD

The present disclosure relates to the field of application control by a human body, in particular to a method and a device for controlling an application, and an electronic device.

### BACKGROUND

Different from a traditional video game which is operated by a joystick or a keyboard, a motion sensing game is a novel video game which is performed (operated) by body actions.

The motion sensing games have appeared in various game platforms, such as Wii, PS and Xbox.

Currently, one way for the motion sensing game to acquire a user's action includes collecting an image of a user through a camera, processing the image to acquire data describing the user's action, and then controlling the game in accordance with the data. The user's action is interpreted by a game system as control capable of affecting the game, i.e., the user may control the game through his actions. Essentially, the user's action may be interpreted into any types of game control, e.g., an action for controlling a controlled object in the game, or a menu-related operation such as "save the game" or "quit the game".

However, there is huge resources consumption in an existing motion sensing game. To be specific, for the motion sensing game which senses a user's motion through an image, it is at first required to collect the user's image, then establish a model based on the collected user's image, and then perform model matching (i.e., interpreting the action) so as to determine a corresponding command. However, as is known to all, the image processing is a very resources-consuming processing for an existing computer system. When the above processing is performed on each of the collected image, a program may run slowly and the user experience may be degraded.

The above description is given by taking the motion sensing game as an example. Of course, it should be appreciated that, the above defect will exist when an application is controlled by sensing the user's motion through the image.

### SUMMARY

An object of the present disclosure is to provide a method and a device for controlling an application, and an electronic device, so as to enable the application to run more quickly.

In one aspect, the present disclosure provides in an embodiment a method for controlling an application, including: acquiring a depth image sequence recording a user's motion; converting the depth image sequence into a first user gesture data sequence in advance in accordance with a mathematical conversion model; acquiring, from a standard gesture data sequence preset in the application, first target gesture data that matches user gesture data to be processed currently in the first user gesture data sequence, and controlling the application based on the first target gesture data; and when a duration desired to be maintained by a target gesture corresponding to the first target gesture data exceeds a predetermined threshold, selecting, from a second user gesture data sequence, a portion of user gesture data for a subsequent matching process, the second user gesture data sequence being adjacent to a data sequence consisting of the processed user gesture data, and a length of the second user gesture data sequence being related to the duration desired to be maintained by the target gesture.

Alternatively, when the duration desired to be maintained by the target gesture corresponding to the first target gesture data exceeds the predetermined threshold, the first and second user gesture data includes a piece of target gesture starting subdata, at least one piece of target gesture intermediate subdata, and a piece of target gesture ending subdata.

Alternatively, the step of selecting, from the second user gesture data sequence, a portion of the user gesture data for the subsequent matching process includes: with respect to the at least one piece of target gesture intermediate subdata and the piece of target gesture ending subdata, selecting, from the second user gesture data sequence, a portion of the user gesture data for the subsequent matching process.

Alternatively, an operation of acquiring the first user gesture data sequence through conversion is completed before the user gesture data is desired to be used by the application.

Alternatively, the mathematical conversion model corresponds to a plurality of applications, and the method further includes: after acquiring the first user gesture data sequence, determining a target application from the plurality of applications; and determining a standard gesture data sequence corresponding to the target application so as to perform gesture matching.

Alternatively, the step of acquiring the depth image sequence recording the user's motion includes: acquiring an original image sequence of a user; and performing at least one of resolution reduction, background removal, noise elimination and depth adjustment on images in the original image sequence, so as to obtain the depth image sequence.

Alternatively, each piece of standard gesture data corresponds to a screen user image displayed on a display screen, and the step of controlling the application based on the first target gesture data includes: changing a current screen user image displayed on the display screen to a first screen user image corresponding to the first target gesture data.

Alternatively, each standard gesture corresponds to a duration desired to be maintained, and the method further includes: determining run time for the application; determining second target gesture data in accordance with the run time for the application and the duration desired to be maintained by each standard gesture in the standard gesture data sequence; and sending a prompt when the second target gesture data is different from the first target gesture data.

Alternatively, each standard gesture corresponds to a duration desired to be maintained, and the method further includes: determining run time for the application; determining second target gesture data in accordance with the run time for the application and the duration desired to be maintained by each standard gesture in the standard gesture data sequence; determining a second screen user image corresponding to the second target gesture data; and sending a prompt when a difference between the second screen user image and the first screen user image exceeds a predetermined difference criterion.

In another aspect, the present disclosure provides in an embodiment a device for controlling an application, including: an acquisition module configured to acquire a depth image sequence recording a user's motion; a conversion module configured to convert the depth image sequence into a first user gesture data sequence in advance in accordance with a mathematical conversion model; a processing module configured to acquire, from a standard gesture data sequence preset in the application, first target gesture data that matches user gesture data to be processed currently in the first user gesture data sequence, and control the application based on the first target gesture data; and a selection module configured to, when a duration desired to be maintained by a target gesture corresponding to the first target gesture data exceeds a predetermined threshold, select, from a second user gesture data sequence, a portion of user gesture data for a subsequent matching process, the second user gesture data sequence being adjacent to a data sequence consisting of the processed user gesture data, and a length of the second user gesture data sequence being related to the duration desired to be maintained by the target gesture.

Alternatively, when the duration desired to be maintained by the target gesture corresponding to the first target gesture data exceeds the predetermined threshold, the first and second user gesture data includes a piece of target gesture starting subdata, at least one piece of target gesture intermediate subdata, and a piece of target gesture ending subdata.

Alternatively, the selection module is configured to, with respect to the at least one piece of target gesture intermediate subdata and the piece of target gesture ending subdata, select, from the second user gesture data sequence, a portion of the user gesture data for the subsequent matching process.

Alternatively, an operation of acquiring the first user gesture data sequence through conversion is completed before the user gesture data is desired to be used by the application.

Alternatively, the mathematical conversion module corresponds to a plurality of applications, and the device further includes: an application determination module configured to, after acquiring the first user gesture data sequence, determine a target application from the plurality of applications; and a standard gesture data sequence determination module configured to determine a standard gesture data sequence corresponding to the target application so as to perform gesture matching.

Alternatively, the acquisition module includes: an original image sequence acquisition unit configured to acquire an original image sequence of a user; and an optimization unit configured to perform at least one of resolution reduction, background removal, noise elimination and depth adjustment on images in the original image sequence, so as to obtain the depth image sequence.

Alternatively, each piece of standard gesture data corresponds to a screen user image displayed on a display screen, and the processing module is configured to change a current screen user image displayed on the display screen to a first screen user image corresponding to the target gesture data, so as to control the application.

Alternatively, each standard gesture corresponds to a duration desired to be maintained, and the device further includes: a time determination module configured to determine run time for the application; a target gesture data determination module configured to determine second target gesture data in accordance with the run time for the application and the duration desired to be maintained by each standard gesture in the standard gesture data sequence; and a first prompt module configured to send a prompt when the second target gesture data is different from the first target gesture data.

Alternatively, each standard gesture corresponds to a duration desired to be maintained, and the device further includes: a time determination module configured to determine run time for the application; a target gesture data determination module configured to determine second target gesture data in accordance with the run time for the application and the duration desired to be maintained by each standard gesture in the standard gesture data sequence; a screen user image determination module configured to determine a second screen user image corresponding to the second target gesture data; and a second prompt module configured to send a prompt when a difference between the second screen user image and the first screen user image exceeds a predetermined difference criterion.

In yet another aspect, the present disclosure provides in an embodiment an electronic device including the above-mentioned device for controlling an application.

According to the method and the device for controlling an application and the electronic device in the embodiments of the present disclosure, the image of the user's motion is collected, and then the user gesture data sequence is obtained by analyzing the image. When the duration desired to be maintained by the target gesture corresponding to the standard gesture data that matches a certain piece of user gesture data is relatively long, a portion of the user gesture data is selected from the subsequent user gesture data sequence so as to perform the subsequent matching process. As a result, it is able to ensure the application to run more quickly.

### BRIEF DESCRIPTION OF THE DRAWINGS

Fig. 1 is a flow chart of a method for controlling an application according to an embodiment of the present disclosure;
Fig.2 is a schematic view showing a device for controlling an application according to an embodiment of the present disclosure; and
Fig.3 is a schematic view showing the detailed implementation of the method for controlling an application according to an embodiment of the present disclosure.

### DETAILED DESCRIPTION

According to a method and a device for controlling an application and an electronic device in the embodiments of the present disclosure, an image of a user's motion is collected, and then a user gesture data sequence is obtained by analyzing the image. When a duration desired to be maintained by a target gesture corresponding to standard gesture data that matches a certain piece of user gesture data is relatively long, a portion of the user gesture data is selected from the subsequent user gesture data sequence so as to perform the subsequent matching process. As a result, it is able to ensure the application to run more quickly.

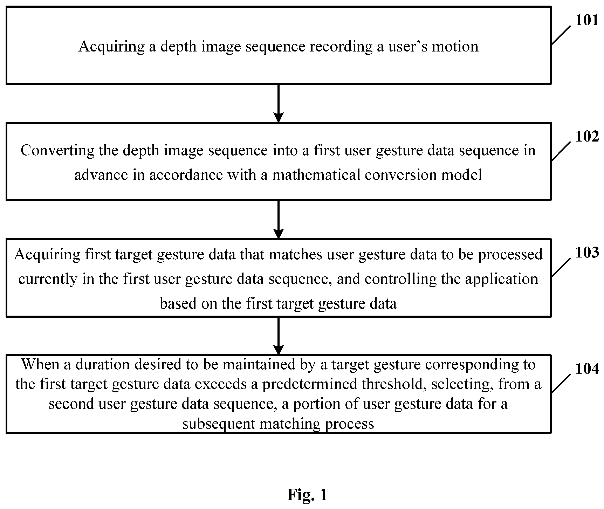

As shown in Fig.1, a method for controlling an application in an embodiment of the present disclosure includes: Step 101: acquiring a depth image sequence recording a user's motion; Step 102: converting the depth image sequence into a first user gesture data sequence in advance in accordance with a mathematical conversion model; Step 103: acquiring, from a standard gesture data sequence preset in the application, first target gesture data that matches user gesture data to be processed currently in the first user gesture data sequence, and controlling the application based on the first target gesture data; and Step 104: when a duration desired to be maintained by a target gesture corresponding to the first target gesture data exceeds a predetermined threshold, selecting, from a second user gesture data sequence, a portion of user gesture data for a subsequent matching process, the second user gesture data sequence being adjacent to a data sequence consisting of the processed user gesture data, and a length of the second user gesture data sequence being related to the duration desired to be maintained by the target gesture.

According to the method for controlling an application in the embodiment of the present disclosure, an image of the user's motion is collected, and then the user gesture data sequence is obtained by analyzing the image. When the preset duration desired to be maintained by the target gesture corresponding to the standard gesture data that matched a certain piece of user gesture data is relatively long, a portion of the user gesture data is selected from the subsequent user gesture data sequence so as to perform the subsequent matching process. Due to a decrease in the volume of the data to be processed as well as a long duration for the data processing, it is able to ensure the application to run more quickly.

The advantageous effect will be described hereinafter in more details.

Presumed that an image collector collects the images at a rate of X images per second and a duration for the collection in the related art is equal to that for processing the application (converting and matching the image), i.e., Y seconds, the number of the collected images are X*Y. Presumed that a processor resources to be consumed by a matching process on the user gesture data corresponding to each image (excluding the resources to be consumed by the conversion of the image into the user gesture data) is Z, the processor resources to be consumed in the related art is X*Y*Z, and the processor resources to be consumed in unit time is X*Y.

Usually, the following two ways may be adopted so as to ensure the application to run more quickly, i.e., reducing the entire data volume to be processed, and reducing the processor resources to be consumed in unit time.

According to the method in the embodiments of the present disclosure, when it is determined that the duration desired to be maintained by the target gesture exceeds the predetermined threshold, in the following processing, a portion of the data may be selected from the data sequence for the subsequent matching process. Hence, as compared with the related art, it is able to reduce the data volume desired to be processed, thereby to ensure the application to run more quickly.

In addition, in terms of the processor resources consumed in unit time, the method may include two stages, i.e., a data conversion stage and a data matching stage. However, a controlling method in the related art merely includes one stage, i.e., the data conversion and the data matching are performed simultaneously. In other words, for the method in the embodiments of the present disclosure, the duration for the processing is longer than that in the related art even when the data volume desired to be processed is not reduced (a conversion pre-processing is added before the running of the game). Hence, according to the method in the embodiments of the present disclosure, the processor resources to be consumed in unit time is less than that in the related art, and it is also able to ensure the application to run more quickly.

In other words, it is able for the method in the embodiments of the present disclosure to prolong the duration for the data processing while reducing the data volume desired to be processed, thereby to ensure the application to run more quickly.

Of course, it should be appreciated that, although the user gesture data sequence is acquired in the above method in advance in accordance with the depth image sequence, no adverse effect will be caused to the control of the application by the user.

At first, the application involved in the embodiments of the present disclosure has the following features.

1. The application is provided in advance with the standard gesture data sequence, i.e., the user is required to complete the standard gestures corresponding to the standard gesture data sequence in a certain order. In other words, for the application, the actions desired to be made by the user are predetermined ones and known to the user beforehand.

For example, the application may be a motion sensing Yoga game, which has specified that the user is required to perform a series of actions in a certain order so as to complete the challenge. For another example, the application may be a motion sensing dance game, which has specified that the user is required to perform a series of actions in a certain order so as to complete a current level. For yet another example, the application may a motion sensing labyrinth game, which has specified that the user is required to perform a series of actions in a certain order so as to find his way out of the labyrinth corresponding to the current level in an optimal manner. There are various such applications, which are not particularly defined herein.

For these applications, there is a very low real-time requirement on the control made by the user, so the collection of the images in advance and the conversion of the images into the user gesture data sequence will not cause any uncontrollable consequences to the game control made by the user.

2. In accordance with settings in the application, when some actions have been completed, the user is required to maintain these actions for a certain duration. For example, in the Yoga game, the user is required to maintain a certain gesture for a period of time, and for another example, in the motion sensing dance game, the user is required to maintain a certain gesture when an identical musical note is played.

As can be seen from the above, due to the specificity of these applications, when there is a gesture desired to be maintained for a certain duration (e.g., 5 seconds) and the images are collected at a rate of 10 images per second, totally 50 images may be collected within 5 seconds. When the actions are performed by the user as required, the same standard gesture data may be acquired when these 50 images are matched with the corresponding user gesture data.

In the embodiments of the present disclosure, a portion of 50 pieces of user gesture data corresponding to the images collected within 5 seconds may be selected at a certain interval, so as to determine whether or not the user's action has been completed accurately.

For example, when one piece of gesture data is selected from 5 pieces of user gesture data, 10 pieces of user gesture data may be selected from these 50 pieces of user gesture for the subsequent matching process. When the standard gesture data that matches the 10 pieces of user gesture data is the same, it means that the user has completed the prescribed action.

In other words, due to the specificity of the actions, when a portion of the user gesture data is selected from the user gesture data sequence, it is able to perform the same function (e.g., to verify the continuity of the action made by the user, or determine an instruction on the basis of the action sequence), thereby to achieve the same effect.

In a word, it is able for the method in the embodiments of the present disclosure to perform the complete motion control of the application, and ensure the application to run more quickly.

As can be seen from the above, the determination of the second user gesture data sequence is related to the duration to be maintained by the target gesture.

When there is a gesture desired to be maintained by the user for a certain duration (e.g., 5 seconds) and a gesture starting time point has been determined, the second user gesture data sequence consists of the user gesture data acquired after the conversion of the images collected within 5 seconds from the gesture starting time point. When the images are collected at a rate of 10 images per second and the gesture starting time point has been determined, the second user gesture data sequence consists of the user gesture data acquired after the conversion of the images collected within 10 seconds from the gesture starting time point.

In the embodiments of the present disclosure, the depth image sequence may be acquired by a depth camera, a video camera, a stereo camera and/or any other suitable image capturing device.

In order to improve the accuracy, in the embodiments of the present disclosure, the data corresponding to the target gesture that is desired to be maintained for a certain duration may be divided into three parts, i.e., a piece of target gesture starting subdata, at least one piece of target gesture intermediate subdata, and a piece of target gesture ending subdata.

In this case, the step of selecting, from the second user gesture data sequence, a portion of the user gesture data for the subsequent matching process includes: with respect to the at least one piece of target gesture intermediate subdata and one piece of target gesture ending subdata, selecting, from the second user gesture data sequence, a portion of the user gesture data for the subsequent matching process.

In other words, the more the number of the target gesture intermediate subdata, the more the user gesture data desired to be selected, and the more accurate the result of the subsequent control processing.

In the embodiments of the present disclosure, the gesture data is the data indicating body parts of the user, positions of the body parts, and relative positional relationship between the body parts.

The gesture data may be described any existing model capable of describing a human body, including but not limited to a skeleton model consisting of skeletons and joints, or a wireframe grid model, which are not particularly defined herein..

In the embodiments of the present disclosure, the images collected by the image collector may be directly converted into the user gesture data. However, by taking such factors as the data volume to be processed and the conversion accuracy into consideration, in the embodiments of the present disclosure, the collected images may be optimized at first. In other words, the step of acquiring the depth image sequence recording the user's motion includes: acquiring an original image sequence of a user; and performing at least one of resolution reduction, background removal, noise elimination and depth adjustment on images in the original image sequence, so as to obtain the depth image sequence.

The above optional processings such as resolution reduction and background removal help to perform the subsequent conversion at small computation overhead.

For example, when capturing an image, there may exist various random or systematic errors, and there may exist some defects or distortions in the collected image due to the image collector itself. Through the noise elimination, it is able to overcome these defects in a better manner, thereby to obtain the accurate and complete data, and ensure the accuracy of the user gesture data obtained after the subsequent conversion.

Of course, it should be appreciated that, the present disclosure is not limited to the above-mentioned optimization operations.

It should be appreciated that, the mathematical conversion model may be obtained at a very high price. In one embodiment of the present disclosure, the mathematical conversion model may be allocated to a plurality of applications, so as to reduce the development cost. In most cases, the standard gesture data sequences corresponding to the applications are different from each other, so the method may further include: after acquiring the first user gesture data sequence, determining a target application from the plurality of applications; and determining the standard gesture data sequence corresponding to the target application so as to perform gesture matching.

After the user has completed in advance the action prescribed by the application desired to be controlled, the target application may be determined, and the standard gesture data sequence corresponding to the target application may be selected so as to process the acquired user gesture data sequence.

Through the above-mentioned way, one mathematical conversion model may be used by a plurality of applications, so it is able to remarkably reduce the development cost. For example, the gestures adopted by the motion sensing Yoga game, the motion sensing dance game and the motion sensing labyrinth game are substantially the same, so one mathematical conversion may be adopted, so as to reduce the development cost.

According to the method for controlling an application in the embodiments of the present disclosure, an operation of acquiring the first user gesture data sequence by conversion is completed prior to a stage where the user gesture data is desired to be used by the application. Through dividing the method into two stages, i.e., data conversion and data matching, it is able to prolong the duration for the data processing and reduce the requirements on the processor resources in unit time, thereby to enable the application to run more quickly.

A moment when the user gesture data is desired to be used by the application will be described hereinafter.

Taking the motion sensing dance game as an example, no user gesture data is desired when the user starts the application, and the user gesture data is merely desired to be used when the user selects a game level, a game scene and selects "start the game".

The method according to the embodiments of the present disclosure may be applied to various scenes, and a typical one is a body action tracking scene. Each piece of standard gesture data corresponds to a screen user image displayed on a display screen, and the step of controlling the application based on the target gesture data includes: changing a current screen user image displayed on the display screen to a first screen user image corresponding to the target gesture data.

For example, when the user is changed from a standing gesture to a sitting-down gesture, the collected image of the sitting-down gesture may be converted into one piece of user gesture data, and this user gesture data may match the sitting-down gesture data in the standard gesture data. At this time, through some display processing methods, it is able to change a standing image displayed on the screen to a sitting-down image.

It should be appreciated that, the above procedure is merely a simplified one for ease of understanding, and during the actual procedure, more ways may also be provided so as to improve the user experience, which are not particularly defined herein.

In the embodiments of the present disclosure, the user may be prompted in various ways whether or not the user's action meets the requirements. Two of the possible ways will be described hereinafter.

The application has specified in advance the order of the actions to be made by the user and the duration of each action, so at some time points, the user should maintain a special gesture.

Presumed that the standard gesture sequence specified in advance by the application includes maintaining gesture A1 for B1 seconds, maintaining gesture A2 for B2 seconds, maintaining gesture A3 for B3 seconds, and maintaining gesture A4 for B4 seconds, at this time, when the time point is within a range (B1, B1+B2), the user shall maintain gesture A2.

Because each gesture corresponds to a piece of standard gesture data, as can be seen from the above analysis, it is able to determine a current action that should have been made by the user when the run time for the application is determined, i.e., to determine the standard gesture data corresponding to the current standard gesture that should have been maintained by the user.

When the current gesture made by the user is different from that should have been made, it may be determined that the user does not make the action as required, and then a prompt may sent to the user.

In this case, each standard gesture corresponds to a duration desired to be maintained by the gesture, and the method further includes steps of: determining the run time for the application; determining second target gesture data in accordance with the run time for the application and the duration desired to be maintained by each standard gesture in the standard gesture data sequence; and sending a prompt when the second target gesture data is different from the first target gesture data.

Of course, whether or not the user's action meets the requirement is determined hereinabove by taking the gesture data as a reference. Because the gesture data corresponding the screen user images, whether or not the user's action meets the requirement may also be determined in accordance with whether or not a difference between the screen user images exceeds a predetermined difference criterion.

In this case, the method further includes steps of: determining the run time for the application; determining second target gesture data in accordance with the run time for the application and the duration desired to be maintained by each standard gesture in the standard gesture data sequence; determining a second screen user image corresponding to the second target gesture data; and sending a prompt when a difference between the second screen user image and the first screen user image exceeds a predetermined difference criterion.

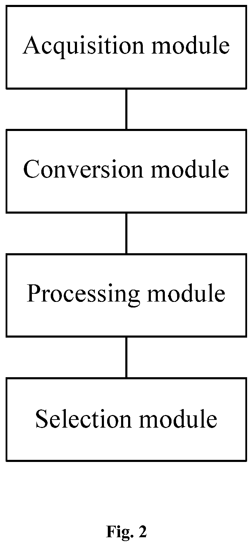

As shown in Fig.2, a device for controlling an application according to an embodiment of the present disclosure includes: an acquisition module configured to acquire a depth image sequence recording a user's motion; a conversion module configured to convert the depth image sequence into a first user gesture data sequence in advance in accordance with a mathematical conversion model; a processing module configured to acquire, from a standard gesture data sequence preset in the application, first target gesture data that matches user gesture data to be processed currently in the first user gesture data sequence, and control the application based on the first target gesture data; and a selection module configured to, when a duration desired to be maintained by a target gesture corresponding to the first target gesture data exceeds a predetermined threshold, select, from a second user gesture data sequence, a portion of user gesture data for a subsequent matching process, the second user gesture data sequence being adjacent to a data sequence consisting of the processed user gesture data, and a length of the second user gesture data sequence being related to the duration desired to be maintained by the target gesture.

In the embodiments of the present disclosure, for ease of comparison, when the duration desired to be maintained by the target gesture corresponding to the gesture data exceeds the predetermined threshold, the gesture data includes a piece of target gesture starting subdata, at least one piece of target gesture intermediate subdata, and a piece of target gesture ending subdata. The selection module is specifically configured to, with respect to the at least one piece of target gesture intermediate subdata and the piece of target gesture ending subdata, select, from the second user gesture data sequence, a portion of the user gesture data for the subsequent matching process.

In the embodiments of the present disclosure, an operation of acquiring the first user gesture data sequence through conversion is completed before the user gesture data is desired to be used by the application, and the data processing procedure is divided into several stages so as to prolong the time period for processing the data. As a result, it is able to reduce the processor resources desired to be consumed in unit time, thereby to enable the application to run more quickly.

In order to reduce the development cost, the mathematical conversion module corresponds to a plurality of applications, and the device further includes: an application determination module configured to, after acquiring the first user gesture data sequence, determine, from the plurality of applications, a target application; and a standard gesture data sequence determination module configured to determine a standard gesture data sequence corresponding to the target application so as to perform gesture matching.

In order to further improve the running efficiency or calculate the user data sequence in a more accurate manner, the acquisition module includes: an original image sequence acquisition unit configured to an original image sequence of a user; and an optimization unit configured to perform at least one of resolution reduction, background removal, noise elimination and depth adjustment on images in the original image sequence, so as to obtain the depth image sequence.

The device in the embodiments of the present disclosure may be used to track the user's action, and each piece of standard gesture data corresponds to a screen user image displayed on a display screen. The processing module is configured to change a current screen user image displayed on the display screen to a first screen user image corresponding to the target gesture data, so as to control the application.

In order to prompt the user when a nonstandard action has been made, each standard gesture corresponds to a duration desired to be maintained, and the device further includes: a time determination module configured to determine run time for the application; a target gesture data determination module configured to determine second target gesture data in accordance with the run time for the application and the duration desired to be maintained by each standard gesture in the standard gesture data sequence; and a first prompt module configured to send a prompt when the second target gesture data is different from the first target gesture data.

Alternatively, in order to prompt the user when a nonstandard action has been made, each standard gesture corresponds to a duration desired to be maintained, and the device further includes: a time determination module configured to determine run time for the application; a target gesture data determination module configured to determine second target gesture data in accordance with the run time for the application and the duration desired to be maintained by each standard gesture in the standard gesture data sequence; a screen user image determination module configured to determine a second screen user image corresponding to the second target gesture data; and a second prompt module configured to send a prompt when a difference between the second screen user image and the first screen user image exceeds a predetermined difference criterion.

The present disclosure further provides an electronic device including the above-mentioned device for controlling an application. The electronic device may be a personal computer, a game platform or a TV.

One working procedure of the above-mentioned method will be described hereinafter.

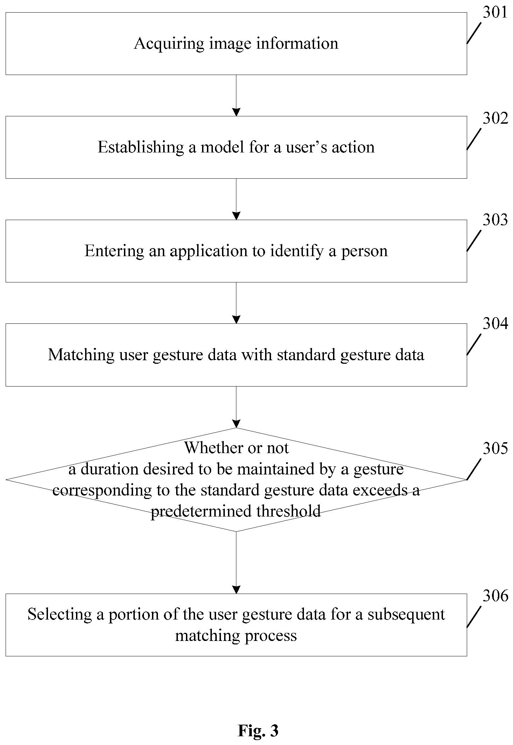

As shown in Fig.3, before the application is desired to use the user gesture data, Step 301 is performed, i.e., the images collected by an image collector (e.g., a depth camera) are acquired at first, so as to obtain an image sequence. After acquiring the image sequence, optionally, a series of optimization processings, e.g., noise reduction, background removal and resolution reduction, may be performed on the images in the image sequence,

At Step 302, the captured depth image of a real person is converted into the user gesture data using a skeleton model and a body part model, so as to establish a model for the user's actions, thereby to obtain the user gesture data sequence. Then, the user gesture data sequence is stored in a storage unit. The user gesture data sequence defines related information about the user's body parts (e.g., positions, gestures, and a relative positional relationship between the body parts), so as to perform the subsequent matching process. When one model may be used for a plurality of applications, it is required to determine at Step 303 a target application, and acquire the predetermined standard gesture data sequence from the target application, so as to perform the subsequent matching process.

At Step 304, the matching process may be performed in accordance with the user gesture data and the standard gesture data sequence, and the standard gesture data that matches the user gesture data to be processed currently may be determined.

At Step 305, judging whether or not the duration desired to be maintained by the gesture corresponding to the predetermined standard gesture data in the application exceeds a predetermined threshold, and if yes, it means that the user shall maintain the gesture for a long period of time.

When it is judged that the user shall maintain the gesture for a long period of time, it means that a small volume of data may be used for the subsequent matching process. So, at Step 306, a portion of the user gesture data may be selected for the subsequent matching process. Otherwise, a normal procedure may be followed.

When a portion of the user gesture data is selected for the subsequent matching process, the gesture data desired to be maintained for a duration in the standard gesture data sequence includes a piece of gesture data corresponding to a starting time point, one or more pieces of gesture data corresponding to intermediate time points, and a piece of gesture data corresponding to an ending time point. The selection and matching of the user gesture data may be performed in accordance with the above pieces of gesture data.

Of course, during the matching process, whether or not the user has made the action as required may be determined in accordance with a difference between the pieces of gesture data, or a difference between the user image actually displayed on the display screen and an expected user image, and if not, a prompt may be sent to the user.

The above are merely the preferred embodiments of the present disclosure. It should be appreciated that, a person skilled in the art may make further modifications and improvements without departing from the principle of the present disclosure, and these modifications and improvements shall also fall within the scope of the present disclosure.

## Claims

1. A method for controlling an application, comprising:
acquiring a depth image sequence recording a user's motion;
converting the depth image sequence into a first user gesture data sequence in advance in accordance with a mathematical conversion model;
acquiring, from a standard gesture data sequence preset in the application, first target gesture data that matches user gesture data to be processed currently in the first user gesture data sequence, and controlling the application based on the first target gesture data; and
when a duration desired to be maintained by a target gesture corresponding to the first target gesture data exceeds a predetermined threshold, selecting, from a second user gesture data sequence, a portion of user gesture data for a subsequent matching process, wherein the second user gesture data sequence being adjacent to a data sequence consisting of the processed user gesture data, and a length of the second user gesture data sequence being related to the duration desired to be maintained by the target gesture.

2. The method according to claim 1, wherein when the duration desired to be maintained by the target gesture corresponding to the first target gesture data exceeds the predetermined threshold, the first and second user gesture data comprises a piece of target gesture starting subdata, at least one piece of target gesture intermediate subdata, and a piece of target gesture ending subdata.

3. The method according to claim 2, wherein the step of selecting, from the second user gesture data sequence, a portion of the user gesture data for the subsequent matching process comprises: with respect to the at least one piece of target gesture intermediate subdata and the piece of target gesture ending subdata, selecting, from the second user gesture data sequence, a portion of the user gesture data for the subsequent matching process.

4. The method according to claim 1, wherein an operation of acquiring the first user gesture data sequence through conversion is completed before the user gesture data is desired to be used by the application.

5. The method according to claim 1, wherein the mathematical conversion model corresponds to a plurality of applications, and the method further comprises:
after acquiring the first user gesture data sequence, determining a target application from the plurality of applications; and
determining a standard gesture data sequence corresponding to the target application so as to perform gesture matching.

6. The method according to claim 1, wherein the step of acquiring the depth image sequence recording the user's motion comprises:
acquiring an original image sequence of a user; and
performing at least one of resolution reduction, background removal, noise elimination and depth adjustment on images in the original image sequence, so as to obtain the depth image sequence.

7. The method according to claim 1, wherein each piece of standard gesture data corresponds to a screen user image displayed on a display screen, and
the step of controlling the application based on the first target gesture data comprises:
changing a current screen user image displayed on the display screen to a first screen user image corresponding to the first target gesture data.

8. The method according to claim 6, wherein each standard gesture corresponds to a duration desired to be maintained, and the method further comprises:
determining run time for the application;
determining second target gesture data in accordance with the run time for the application and the duration desired to be maintained by each standard gesture in the standard gesture data sequence; and
sending a prompt when the second target gesture data is different from the first target gesture data.

9. The method according to claim 6, wherein each standard gesture corresponds to a duration desired to be maintained, and the method further comprises:
determining run time for the application;
determining second target gesture data in accordance with the run time for the application and the duration desired to be maintained by each standard gesture in the standard gesture data sequence;
determining a second screen user image corresponding to the second target gesture data; and
sending a prompt when a difference between the second screen user image and the first screen user image exceeds a predetermined difference criterion.

10. A device for controlling an application, comprising:
an acquisition module configured to acquire a depth image sequence recording a user's motion;
a conversion module configured to convert the depth image sequence into a first user gesture data sequence in advance in accordance with a mathematical conversion model;
a processing module configured to acquire, from a standard gesture data sequence preset in the application, first target gesture data that matches user gesture data to be processed currently in the first user gesture data sequence, and control the application based on the first target gesture data; and
a selection module configured to, when a duration desired to be maintained by a target gesture corresponding to the first target gesture data exceeds a predetermined threshold, select, from a second user gesture data sequence, a portion of user gesture data for a subsequent matching process, wherein the second user gesture data sequence being adjacent to a data sequence consisting of the processed user gesture data, and a length of the second user gesture data sequence being related to the duration desired to be maintained by the target gesture.

11. The device according to claim 10, wherein when the duration desired to be maintained by the target gesture corresponding to the first target gesture data exceeds the predetermined threshold, the first and second user gesture data comprises a piece of target gesture starting subdata, at least one piece of target gesture intermediate subdata, and a piece of target gesture ending subdata.

12. The device according to claim 11, wherein the selection module is configured to, with respect to the at least one piece of target gesture intermediate subdata and the piece of target gesture ending subdata, select, from the second user gesture data sequence, a portion of the user gesture data for the subsequent matching process.

13. The device according to claim 10, wherein an operation of acquiring the first user gesture data sequence through conversion is completed before the user gesture data is desired to be used by the application.

14. The device according to claim 10, wherein the mathematical conversion module corresponds to a plurality of applications, and the device further comprises:
an application determination module configured to, after acquiring the first user gesture data sequence, determine a target application from the plurality of applications,; and
a standard gesture data sequence determination module configured to determine a standard gesture data sequence corresponding to the target application so as to perform gesture matching.

15. The device according to claim 10, wherein the acquisition module comprises:
an original image sequence acquisition unit configured to acquire an original image sequence of a user; and
an optimization unit configured to perform at least one of resolution reduction, background removal, noise elimination and depth adjustment on images in the original image sequence, so as to obtain the depth image sequence.

16. The device according to claim 10, wherein each piece of standard gesture data corresponds to a screen user image displayed on a display screen, and the processing module is configured to change a current screen user image displayed on the display screen to a first screen user image corresponding to the target gesture data, so as to control the application.

17. The device according to claim 16, wherein each standard gesture corresponds to a duration desired to be maintained, and the device further comprises:
a time determination module configured to determine run time for the application;
a target gesture data determination module configured to determine second target gesture data in accordance with the run time for the application and the duration desired to be maintained by each standard gesture in the standard gesture data sequence; and
a first prompt module configured to send a prompt when the second target gesture data is different from the first target gesture data.

18. The device according to claim 16, wherein each standard gesture corresponds to a duration desired to be maintained, and the device further comprises:
a time determination module configured to determine run time for the application;
a target gesture data determination module configured to determine second target gesture data in accordance with the run time for the application and the duration desired to be maintained by each standard gesture in the standard gesture data sequence;
a screen user image determination module configured to determine a second screen user image corresponding to the second target gesture data; and
a second prompt module configured to send a prompt when a difference between the second screen user image and the first screen user image exceeds a predetermined difference criterion.

19. An electronic device comprising the device according to any one of claims 10 to 18.
